# EUROPEAN PATENT SPECIFICATION

(11) **EP 1 886 912 B1**
(45) Date of publication and mention of the grant of the patent: **29.09.2010**
(21) Application number: 07253092.6
(22) Date of filing: 07.08.2007
(51) Int. Cl.: B62K 25/08, F16F 9/34

(54) **Vehicle with hydraulic suspension**
Fahrzeug mit hydraulischer Aufhängung
Véhicule avec une suspension hydraulique

(30) Priority: 08.08.2006 JP 2006216063
(43) Date of publication of application: 13.02.2008
(73) Proprietor: Yamaha Hatsudoki Kabushiki Kaisha, Iwata-shi, Shizuoka 438-8501 (JP)
(72) Inventor: Fukuda, Hiromi, c/oYamaha Hatsudoki Kabushiki Kaisha, Iwata-shi, Shizuoka 438-8501 (JP)
(74) Representative: Lamb, Martin John Carstairs

(56) References cited:
- EP-A- 1 566 330
- EP-A- 1 666 347
- WO-A-91/17379
- US-A1- 2002 105 119

## Description

### FIELD OF THE INVENTION

The present invention relates to a vehicle, and particularly to a vehicle with a suspension.

### BACKGROUND TO THE INVENTION

There are conventionally known suspension-equipped vehicles, for example as described in JP-A-2005-231603. This patent reference discloses a motorcycle including front forks that are provided between a front wheel and a vehicle body and absorb impact when the vehicle body moves relative to the front wheel. Each of the front forks of the motorcycle includes a high-pressure hydraulic chamber, a low-pressure hydraulic chamber formed such that it surrounds the high-pressure hydraulic chamber, and a piston rod that moves integrally with the low-pressure hydraulic chamber and is inserted into the high-pressure hydraulic chamber. A seal member is attached to a lid that supports the piston rod in such a way that the piston rod can reciprocally move. The seal member provides oil sealing between the lid and the piston rod to prevent oil from moving from one of the high-pressure hydraulic chamber and the low-pressure hydraulic chamber to the other.

The seal member that provides oil sealing between the lid and the piston rod that reciprocally moves as disclosed in the JP-A-2005-231603, however, has a difficulty in completely preventing the oil from moving from one of the high-pressure hydraulic chamber and the low-pressure hydraulic chamber to the other. Specifically, the thickness of the oil film formed between the oil seal and the piston rod depends on the piston speed, and the thickness of the oil film increases as the piston speed increases. In a general vehicle, for improving ride quality compression damping is set to a relatively small value, while extension damping is set to a relatively large value, so that, in general, the piston speed on the compression side increases, while the piston speed on the extension side decreases. As a result, long-term use of the vehicle causes the oil to gradually move from the low-pressure hydraulic chamber to the high-pressure hydraulic chamber so that the amount of oil in the high-pressure hydraulic chamber increases, disadvantageously resulting in a higher hydraulic pressure in the high-pressure hydraulic chamber in a normal state than a predetermined value. When the hydraulic pressure in the high-pressure hydraulic chamber in the normal state is higher than the predetermined value, the reaction force of the front fork increases, so that the position of the vehicle and the ride quality may disadvantageously change.

The invention has been made to solve the above problems, and an object of the invention is to provide a vehicle with a suspension capable of preventing the hydraulic pressure in the high-pressure oil chamber in the normal state from exceeding the predetermined value.

WO91/17379 is directed to a fluid control valve having an electromagnetically operated poppet for opening and closing a central bore between inlet ports coupled to high pressure fluid and outlets ports coupled to low pressure fluid.

### SUMMARY OF THE INVENTION

According to a first aspect of the present invention there is provided
a suspension system according to claim 1.

According to another aspect of the invention there is provided a vehicle comprising:
a wheel;
a vehicle body; and
a suspension according to the first aspect.

The first oil passage may be adapted to be closed when the vehicle is traveling, and opened during hydraulic pressure adjustment when the vehicle is not traveling.

The hydraulic pressure adjuster may include a first check valve that opens and closes the first oil passage, and a first compression coil spring that presses the first check valve in a direction to close the first oil passage.

The suspension may further include:
a rod which is secured at one end to the vehicle body;
a piston secured to the other end of the rod; and
a cylinder in which the piston is disposed, wherein the cylinder is connected to the axle of the wheel.

The hydraulic pressure adjuster may be disposed in the rod.

The suspension may further include a rod guiding member that is attached to the cylinder and moves the cylinder along and relative to the rod. The hydraulic pressure adjuster may be disposed in the rod guiding member.

The hydraulic pressure adjuster may be adapted to be pressed by application of a load from a pressing member so as to open the first oil passage. The pressing member may include a second oil passage for connecting the high-pressure oil chamber to the low-pressure oil chamber, a second check valve that opens and closes the second oil passage, and a second compression coil spring that presses the second check valve at a predetermined pressing force in a direction to close the second oil passage.

The suspension may further comprise a reservoir tank including an oil chamber and a gas chamber, the oil chamber communicating with the high-pressure oil chamber in the suspension. The second check valve may open when the gas pressure in the gas chamber in the reservoir tank is higher than a predetermined value, while closing when the gas pressure is lower than the predetermined value.

The pressing member may be disposed in the cylinder.

The pressing member may be formed separately from the suspension and removably attached to the suspension.

The suspension may further include a seal member that provides sealing between the low-pressure oil chamber and the high-pressure oil chamber.

The suspension may comprise a front fork.

The suspension may include the first oil passage for connecting the high-pressure oil chamber to the low-pressure oil chamber and the hydraulic pressure adjuster that adjusts the hydraulic pressure in the high-pressure oil chamber, as described above. Therefore, even when the oil gradually moves from the low-pressure oil chamber to the high-pressure oil chamber due to extension and compression of the suspension, the, first oil passage can be opened during the hydraulic pressure adjustment when the vehicle is not traveling so as to move the oil from the high-pressure oil chamber side to the low-pressure oil chamber side through the first oil passage. In this way, it is possible to prevent the hydraulic pressure in the high-pressure oil chamber in a normal state from being larger than a predetermined value, thus preventing the reaction force of the suspension from being too large. As a result, it is possible to prevent change in the position of the vehicle and the ride quality.

The hydraulic pressure adjuster of the suspension preferably includes a first check valve that opens and closes the first oil passage and a first compression coil spring that presses the first check valve in the direction in which the first oil passage is closed. In this configuration, the first check valve in the hydraulic pressure adjuster can be moved against the urging force of the first compression coil spring to open the first oil passage, so that the oil can be easily supplied from the high-pressure oil chamber to the low-pressure oil chamber through the first oil passage. In this way, it is easily possible to prevent the hydraulic pressure in the high-pressure oil chamber from being higher than the predetermined value. Furthermore, since the hydraulic pressure adjuster of the suspension includes the first check valve that opens and closes the first oil passage and the first compression coil spring that presses the first check valve in the direction in which the first oil passage is closed so as to adjust the hydraulic pressure in the high-pressure oil chamber, it is possible to prevent the oil that has moved from the high-pressure oil chamber side to the low-pressure oil chamber side through the first oil passage from flowing backward through the first oil passage.

The suspension preferably further includes a rod, one end of which is secured to the vehicle body side, a piston secured to the other end of the rod, and a cylinder in which the piston is disposed, the cylinder connected to the axle of the wheel, and the hydraulic pressure adjuster is disposed in the rod. This configuration can prevent the structure around the rod from being complicated, as compared to the case where the hydraulic pressure adjuster is disposed outside the rod.

The suspension preferably further includes a rod, one end of which is secured to the vehicle body side, a piston secured to the other end of the rod, a cylinder in which the piston is disposed, the cylinder connected to the axle of the wheel, and a rod guiding member that is attached to the cylinder and moves the cylinder along relative to the rod and, and the hydraulic pressure adjuster is disposed in the rod guiding member. This configuration can prevent the structure around the rod guiding member from being complicated, as compared to the case where the hydraulic pressure adjuster is disposed outside the rod guiding member.

The suspension is preferably configured such that a pressing member for applying a load is used to press the hydraulic pressure adjuster so as to open the first oil passage. In this configuration, since the pressing member can be used to press the hydraulic pressure adjuster to open the first oil passage in the hydraulic pressure adjuster, the oil can be easily supplied from the high-pressure oil chamber to the low-pressure oil chamber.

In the suspension configured such that the pressing member is used to press the hydraulic pressure adjuster so as to open the first oil passage, the pressing member preferably includes a second oil passage for connecting the high-pressure oil chamber to the low-pressure oil chamber, a second check valve that opens and closes the second oil passage, and a second compression coil spring that presses the second check valve at a predetermined pressing force in the direction in which the second oil passage is closed. In this configuration, the second check valve in the pressing member can be moved against the urging force of the second compression coil spring so as to open the second oil passage, so that the oil can be easily supplied from the high-pressure oil chamber side to the low-pressure oil chamber side through the second oil passage. Furthermore, since the pressing member includes the second oil passage for connecting the high-pressure oil chamber to the low-pressure oil chamber, the second check valve that opens and closes the second oil passage, and the second compression coil spring that presses the second check valve at a predetermined pressing force in the direction in which the second oil passage is closed, it is possible to prevent the oil that has moved from the high-pressure oil chamber side to the low-pressure oil chamber side through the second oil passage in order to adjust the hydraulic pressure in the high-pressure oil chamber from flowing backward through the second oil passage.

The suspension in which the pressing member includes the second oil passage, the second check valve and the second compression coil spring preferably further includes a reservoir tank including an oil chamber and a gas chamber, the oil chamber communicating with the high-pressure oil chamber in the suspension. The second check valve opens when the gas pressure in the gas chamber in the reservoir tank is higher than a predetermined value, while closing when the gas pressure is lower than the predetermined value. In this configuration, when the oil passes through the second oil passage from the high-pressure oil chamber side to the low-pressure oil chamber side so that the hydraulic pressure in the high-pressure oil chamber, the hydraulic pressure in the oil chamber in the reservoir tank that communicates with the high-pressure oil chamber, and the gas pressure in the gas chamber becomes lower than predetermined values (pressure values in an initial state, for example) , the second oil passage can be closed to prevent the oil from passing from the high-pressure oil chamber side to the low-pressure oil chamber side. It is therefore possible to prevent the hydraulic pressure in the high-pressure oil chamber, the hydraulic pressure in the oil chamber in the reservoir tank, and the gas pressure in the gas chamber from being lower than the predetermined values (pressure values in the initial state). As a result, the hydraulic pressure in the high-pressure oil chamber, the hydraulic pressure in the oil chamber in the reservoir tank, and the gas pressure in the gas chamber can be easily adjusted to the pressure values in the initial state.

In the suspension configured such that the pressing member is used to press the hydraulic pressure adjuster so as to open the first oil passage, the suspension preferably further includes a rod, one end of which is secured to the vehicle body side, a piston secured to the other end of the rod, a cylinder in which the piston is disposed, the cylinder connected to the axle of the wheel, and the pressing member disposed in the cylinder. In this configuration, since the pressing member can be used to press the hydraulic pressure adjuster without disassembling the suspension, the oil can be more easily supplied from the high-pressure oil chamber to the low-pressure oil chamber.

In the suspension configured such that the pressing member is used to press the hydraulic pressure adjuster so as to open the first oil passage, the pressing member is preferably formed separately from the suspension and removably attached to the suspension. This configuration can reduce the weight of the suspension, as compared to the case where the pressing member is provided in the suspension.

The suspension may further include a seal member that provides sealing between the low-pressure oil chamber and the high-pressure oil chamber. For example, when a seal member that allows the oil to easily move from the low-pressure oil chamber to the high-pressure oil chamber is provided, it is possible to prevent the hydraulic pressure in the high-pressure oil chamber in the normal state from being higher than the predetermined value by providing the hydraulic pressure adjuster in which a load is manually and externally applied to supply the oil from the high-pressure oil chamber to the low-pressure oil chamber.

The suspension preferably is a front fork. This configuration can prevent the reaction force of the front fork from being too large.

### BRIEF DESCRIPTION OF THE DRAWINGS

These and other aspects of the present invention will now be described below, by way of example only, with reference to the drawings, in which
Fig. 1 is a side view showing the overall structure of a motorcycle according to a first embodiment of the invention;
Fig. 2 is a cross-sectional view of a front fork of the motorcycle according to the first embodiment shown in Fig. 1;
Fig. 3 is an enlarged cross-sectional view of a portion of the front fork shown in Fig. 2;
Fig. 4 is a cross-sectional view of a portion of the front fork of Figure 2, shown in a configuration for releasing the pressure within a portion of the front fork;
Fig. 5 is a cross-sectional view of a front fork of the motorcycle according to a second embodiment of the invention;
Fig. 6 is an enlarged cross-sectional view of a portion of the front fork shown in Fig. 5;
Fig. 7 is a cross-sectional of a pressing member used in the process for releasing the pressure in the front fork shown in Fig. 5;
Figs. 8 and 9 are a cross-sectional views of the front fork of Fig. 5, shown in various stages of a procedure to release the pressure within the fork;
Fig. 10 is a cross-sectional view a front fork of the motorcycle according to a first variation of the first embodiment of the invention;
Fig. 11 is a cross-sectional view of a pressing member used in a process for releasing the pressure in a front fork of the motorcycle according to a second variation of the second embodiment of the invention; and
Fig. 12 is a cross-sectional view of a reservoir tank of a front fork of the motorcycle according to a third variation of the invention.

### DETAILED DESCRIPTION OF THE INVENTION

### First Embodiment

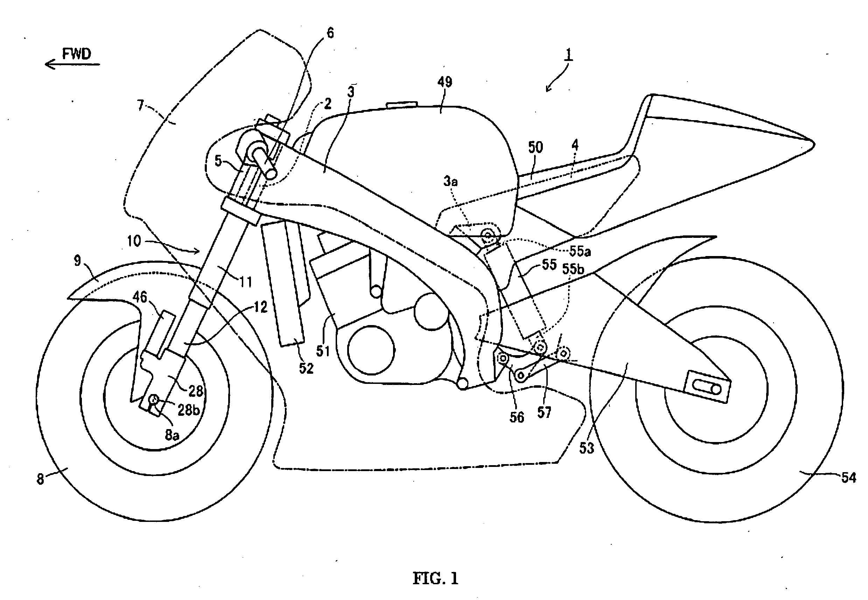

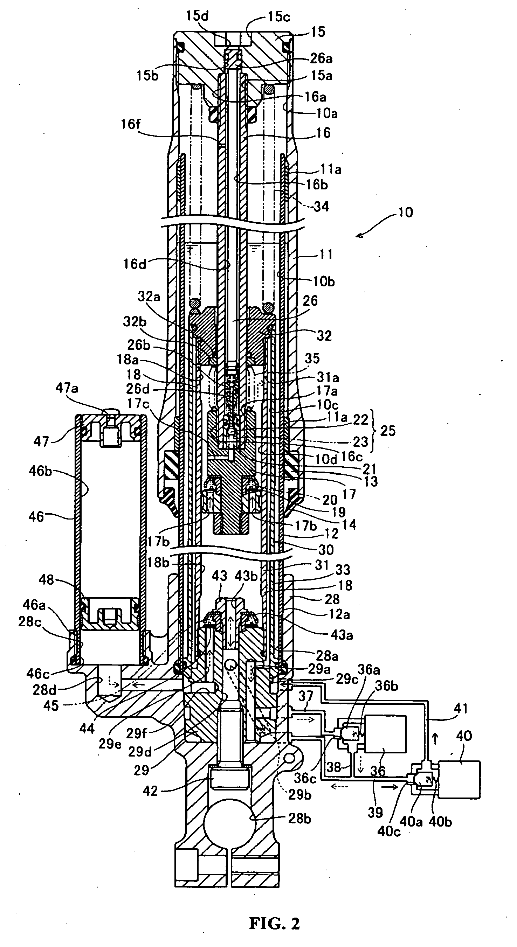

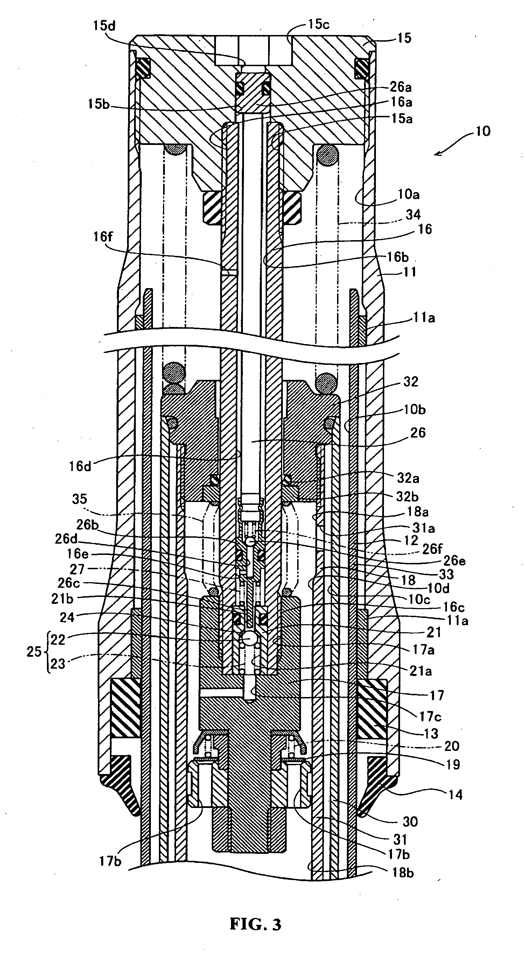

Fig. 1 is a side view showing the overall structure of the motorcycle according to a first embodiment of the invention. Figs. 2 and 3 are cross-sectional views for explaining in detail the structure of a front fork of the motorcycle according to the first embodiment shown in Fig. 1. The first embodiment will be described with reference to a motorcycle as an example of a vehicle of the invention. In Fig. 1, the arrow marked FWD indicates the forward direction in which the motorcycle is intended to travel. The structure of the motorcycle 1 according to the first embodiment of the invention will now be descried in detail with reference to Figs. 1 to 3.

In the motorcycle 1 according to the first embodiment of the invention, as shown in Fig. 1, a main frame 3 is disposed behind a head pipe 2. The main frame 3 is connected to a seat rail 4. A vehicle body frame is formed by the head pipe 2, the main frame 3 and the seat rail 4. The head pipe 2, the main frame 3, and the seat rail 4 form a body frame. The head pipe 2, the main frame 3, and the seat rail 4 are presented by way of example of a "vehicle body" of the invention.

A steering shaft 5 is attached to the head pipe 2. A handle 6 is attached to the upper portion of the steering shaft 5. A front cowl 7 is provided in front of the head pipe 2 and covers the front of the head pipe 2. A front wheel 8 and a front fender 9 disposed above the front wheel 8 are disposed under the front cowl 7. An axle 8a of the front wheel 8 is rotatably attached to the lower end portions of a pair of front forks 10. The front forks 10 have a function of absorbing impact when the vehicle body moves relative to the front wheel 8. The front wheel 8 is an example of a "wheel of the vehicle" of the invention, and each of the front forks 10 is an example of a "suspension" of the invention.

The front fork 10 is extendably provided in such a way that an outer tube 11 and an inner tube 12 slide in the axial direction. Specifically, as shown in Fig. 3, slide metals or pads 11a are provided on the inner circumferential surface of the outer tube 11. The slide movement of the outer circumferential surface of the inner tube 12 along the inner circumferential surfaces of the slide metals 11a allows the front fork 10 to be extended and compressed. A seal member 13 and a dust seal 14 are disposed between the inner circumferential surface of the outer tube 11 and the outer circumferential surface of the inner tube 12.

In the outer tube 11 and the inner tube 12, there are provided an upper gas chamber 10a, an outer oil chamber 10b, and an intermediate oil chamber 10c disposed between the inner circumferential surface of an outer cylinder 33 and the outer circumferential surface of an inner cylinder 18, which will be described later, and an inner oil chamber 10d disposed in the inner cylinder 18. The outer oil chamber 10b is an example of a "low-pressure oil chamber" of the invention, and the intermediate oil chamber 10c and the inner oil chamber 10d are examples of a "high-pressure oil chamber" of the invention. The upper gas chamber 10a has a low air pressure (about 1 atm) in a normal state. The outer oil chamber 10b has a low hydraulic pressure (about 1 atm) in the normal state, and the intermediate oil chamber 10c and the inner oil chamber 10d have high hydraulic pressures (about 5 atm to about 15 atm (about 0.5 MPa to about 1.5 MPa)) in the normal state.

A rod securing member 15 is secured to an upper end section of the outer tube 11 of the front fork 10 to block the opening in the upper end section of the outer tube 11. An upper end screw 16a of a rod 16 is secured into a screw hole 15a in the rod securing member 15.

An oil passage 16b is formed in the rod 16. A lower end screw 16c of the rod 16 is secured into a screw hole 17a in a piston 17 disposed in the inner cylinder 18. The piston 17 divides the inside of the inner cylinder 18 (inner oil chamber 10d) into an upper oil chamber 18a disposed above the piston 17 and a lower oil chamber 18b disposed below the piston 17. The inner cylinder 18 is an example of a "cylinder" of the invention. To pass the oil from the lower oil chamber 18b to the upper oil chamber 18a, a plurality of oil passage holes 17b are formed in the piston 17. A plate-like washer 19 is disposed above the plurality of oil passage holes 17b in such a way that the washer 19 blocks the upper sides of the plurality of oil passage holes 17b. A compression coil spring 20 is disposed on the washer 19 and urges the washer 19 downward.

An oil passage 17c is formed in the piston 17 and passes the oil from the upper oil chamber 18a to the oil passage 16b in the rod 16.

The following components are provided in the rod 16: a tubular member 21 having an oil passage 21a, a spherical valve 22 that opens and closes the oil passage 21a, a compression coil spring 23 that presses the valve 22 upward, and a rubber seal member 24 that provides sealing between the tubular member 21 and the valve 22. The valve 22 is an example of a "first check valve" of the invention, and the compression coil spring 23 is an example of a "first compression coil spring" of the invention. The valve 22 and the compression coil spring 23 form a hydraulic pressure adjuster 25. The hydraulic pressure adjuster 25 is configured such that the compression coil spring 23 presses the valve 22 at a predetermined pressing force to close the oil passage 21a. The hydraulic pressure adjuster 25 is configured to open the oil passage 21a to supply the oil from the upper oil chamber 18a to the oil passage 16b in the rod 16 when the valve 22 is pressed downward against the urging force of the compression coil spring 23.

A pressing member 26 for manually pressing the valve 22 downward during maintenance is disposed in the oil passage 16b in the rod 16. The pressing member 26 is urged upward by a compression coil spring 27 disposed between the lower portion of the pressing member 26 and the upper surface of the tubular member 21. Specifically, an upper end section 26a of the pressing member 26 abuts the upper surface of a lower recessed section 15b of the rod securing member 15, except during maintenance. The upper surface of the upper end section 26a of the pressing member 26 is configured to be pressed downward during maintenance. Specifically, an insertion hole 15d is formed in an upper recessed section 15c of the rod securing member 15. The insertion hole 15d connects the upper recessed section 15c of the rod securing member 15 to the lower recessed section 15b. During maintenance, a stick, rod or the like is inserted into the insertion hole 15d to press the upper surface of the pressing member 26 downward.

A piston 26b is provided on the lower portion of the pressing member 26. The piston 26b divides the inside of the rod 16 (oil passage 16b) into an upper oil passage 16d disposed above the piston 26b and a lower oil passage 16e disposed under the piston 26b. A pressing section 26c is formed in a lower end section of the piston 26b of the pressing member 26 and can be inserted into an oil passage hole 21b of the oil passage 21a in the tubular member 21. The pressing section 26c is disposed apart from the valve 22 by a predetermined gap except during maintenance. An oil passage 26d is formed in the pressing member 26 and permits passage of oil from the lower oil passage 16e to the upper oil passage 16d in the rod 16. The oil passage 26d is an example of a "second oil passage" of the invention.

A spherical valve 26e that opens and closes the oil passage 26d and a compression coil spring 26f that presses the valve 26e downward are provided in the oil passage 26d in the pressing member 26. The valve 26e is an example of a "second check valve" of the invention, and the compression coil spring 26f is an example of a "second compression coil spring" of the invention. The pressing member 26 is configured such that the compression coil spring 26f presses the valve 26e at a predetermined pressing force to close the oil passage 26d.

The valve 26e opens the oil passage 26d to pass the oil from the lower oil passage 16e to the upper oil passage 16d when the gas pressure in a gas chamber 46b in a reservoir tank 46 (see Fig. 2), which will be described later, is higher than a predetermined value (about 5 atm to about 15 atm (about 0.5 MPa to about 1.5 MPa)), while closing the oil passage 26d when the gas pressure is lower than the predetermined value (about 5 atm to about 15 atm (about 0.5 MPa to about 1.5 MPa)).

In the upper portion of the rod 16, an oil passage 16f is formed to pass the oil from the upper oil passage 16d (oil passage 16b) to the upper gas chamber 10a.

The oil passage 17c, the oil passage 21a, the lower oil passage 16e, the oil passage 26d, the upper oil passage 16d, and the oil passage 16f form a "first oil passage" of the invention.

A lower screw 12a of the inner tube 12 in the front fork 10 is secured to a screw hole 28a in an axle bracket 28, as shown in Fig. 2. An insertion section 28b for inserting the axle 8a of the front wheel 8 (see Fig. 1) is formed in the lower portion of the axle bracket 28. A cylinder securing member 29 is secured in the upper portion of the axle bracket 28. The lower portion of an outer cylinder pipe 30 and the lower portion of an inner cylinder pipe 31 are secured to the cylinder securing member 29, respectively. A rod guiding member 32 is secured to the upper portions of the outer cylinder pipe 30 and the inner cylinder pipe 31. The cylinder securing member 29, the inner cylinder pipe 31, and the rod guiding member 32 form the inner cylinder 18, and the cylinder securing member 29, the outer cylinder pipe 30, and the rod guiding member 32 form the outer cylinder 33. The outer cylinder 33 is an example of a "cylinder" of the invention.

The rod guiding member 32 has a function of moving the inner cylinder 18 and the outer cylinder 33 along and relative to the rod 16. As shown in Fig. 3, a seal member 32a is attached to the rod guiding member 32 and provides oil sealing between the reciprocally moving rod 16 and rod guiding member 32 to prevent the oil from moving (leaking) between the upper oil chamber 18a (inner oil chamber 10d) and the outer oil chamber 10b. With the seal member 32a that provides oil sealing between the reciprocally moving rod 16 and the rod guiding member 32, it is difficult to completely prevent the oil from moving from one of the high-pressure upper oil chamber 18a (inner oil chamber 10d) and the low-pressure outer oil chamber 10b to the other. Thus, in the first embodiment, to prevent the hydraulic pressure in the high-pressure upper oil chamber 18a (inner oil chamber 10d) from being lower than a predetermined value, the seal member 32a is formed such that a small amount of oil gradually moves (gradually leaks) from the low-pressure outer oil chamber 10b to the high-pressure upper oil chamber 18a (inner oil chamber 10d). That is, the part (lip) of the seal member 32a that is in contact with the outer circumferential surface of the rod 16 is configured such that the inclination of the lip on the low-pressure outer oil chamber 10b side is smaller than the inclination of the lip on the high-pressure upper oil chamber 18a (inner oil chamber 10d) side. This structure facilitates moving a small amount of oil from the low-pressure outer oil chamber 10b to the high-pressure upper oil chamber 18a (inner oil chamber 10d). The reason why the seal member 32a is formed to gradually move (gradually leak) a small amount of oil is that it is difficult to completely prevent the movement (leakage) of the oil and the seal member 32a is designed to allow a small amount of oil to move (leak). Furthermore, a seal stopper 32b for preventing the seal member 32a from being disengaged downward is provided under the seal member 32a. Moreover, a compression coil spring 34 is disposed between the upper surface of the rod guiding member 32 and the lower surface of the rod securing member 15, and a compression coil spring 35 is disposed between the lower surface of the rod guiding member 32 (seal stopper 32b) and the upper surface of the piston 17. The compression coil spring 35 has a function of reducing impact caused when the piston 17 abuts the rod guiding member 32 when the front fork 10 fully extends.

An oil passage hole 31a that connects the upper oil chamber 18a (inner oil chamber 10d) to the intermediate oil chamber 10c is formed in the upper portion of the inner cylinder pipe 31.

An oil passage 29a connected to the intermediate oil chamber 10c is formed in the lower portion of the cylinder securing member 29, as shown in Fig. 2. The oil passage 29a is connected to an oil passage 37 connected to an extension-side damping force controller 36. The extension-side damping force controller 36 is also connected to an oil passage 38 leading to the lower oil chamber 18b.

The extension-side damping force controller 36 is configured to pass the oil from the oil passage 37 to the oil passage 38 in one direction. The extension-side damping force controller 36 has a function of generating a damping force by passing the oil from the oil passage 37 leading to the intermediate oil chamber 10c to the oil passage 38 leading to the lower oil chamber 18b when the front fork 10 extends. Specifically, the extension-side damping force controller 36 includes a valve 36a that opens and closes an opening on the oil passage 37 side, a damping force (pressure) adjusting mechanism (not shown) including a compression coil spring 36b that urges the valve 36a toward the oil passage 37 side, and a damping passage 36c formed between the opening on the oil passage 37 side and the valve 36a. The extension-side damping force controller 36 is configured such that it uses the damping force adjuster (not shown) to adjust the flow rate of the oil flowing from the oil passage 37 to the oil passage 38 through the damping passage 36c based on a signal from a stroke sensor (not shown) so as to adjust the damping force generated when the front fork 10 extends. That is, the extension-side damping force controller 36 is configured such that it can adjust the damping force generated when the front fork 10 extends according to the state of traveling of the vehicle.

The oil passage 38 is connected to an oil passage 39. The oil passage 39 is connected to an oil passage 29b formed in the lower portion of the cylinder securing member 29 as well as to a compression-side damping force controller 40. The compression-side damping force controller 40 is also connected to an oil passage 41. The oil passage 41 is connected to an oil passage 29c formed in the lower portion of the cylinder securing member 29.

The compression-side damping force controller 40 is configured to pass the oil from the oil passage 39 to the oil passage 41 in one direction. The compression-side damping force controller 40 has a function of generating a damping force by passing the oil from the oil passage 39 to the oil passage 41 when the front fork 10 is compressed. Specifically, the compression-side damping force controller 40 includes a valve 40a that opens and closes an opening on the oil passage 39 side, a damping force (pressure) adjusting mechanism (not shown) including a compression coil spring 40b that urges the valve 40a toward the oil passage 39 side, and a damping passage 40c formed between the opening on the oil passage 39 side and the valve 40a. The compression-side damping force controller 40 is configured such that it uses the damping force adjuster (not shown) to adjust the flow rate of the oil flowing from the oil passage 39 to the oil passage 41 through the damping passage 40c based on a signal from a stroke sensor (not shown) so as to adjust the damping force generated when the front fork 10 is compressed. That is, the compression-side damping force controller 40 is configured such that it can adjust the damping force generated when the front fork 10 is compressed according to the state of traveling of the vehicle.

An oil passage 29d connected to the oil passage 29b is formed in the cylinder securing member 29. A screw 42 for preventing the oil from leaking outward is secured to the lower portion of the oil passage 29d. A support member 43 having a flange 43a is secured to the upper portion of the cylinder securing member 29. An oil passage 43b that connects the lower oil chamber 18b to the oil passage 29d is formed in the support member 43.

An oil passage 29e connected to the lower oil chamber 18b is formed in the cylinder securing member 29. The oil passage 29e is connected to the annular oil passage 29c, which is formed by the cylinder securing member 29, the lower portion of the outer cylinder pipe 30, and the axle bracket 28, through an oil passage 29f. A plate-like washer 44 is disposed above the oil passage 29e to block the upper side of the oil passage 29e. A compression coil spring 45 is disposed on the washer 44. The compression coil spring 45 abuts the flange 43a of the support member 43 and urges the washer 44 downward.

A lower end screw 46a of the reservoir tank 46 is secured into a screw hole 28c in the axle bracket 28. A lid 47 having a gas supply port 47a is attached to the upper portion of the reservoir tank 46. A piston 48 is disposed in the reservoir tank 46. The piston 48 divides the inside of the reservoir tank 46 into a gas chamber 46b situated above the piston 48 and an oil chamber 46c situated under the piston 48. The gas chamber 46b has a predetermined high air pressure value (about 5 atm to about 15 atm (about 0.5 MPa to about 1.5 MPa)) in a normal state, and the oil chamber 46c also has a predetermined high hydraulic pressure value (about 5 atm to about 15 atm (about 0.5 MPa to about 1.5 MPa)) in the normal state.

The oil chamber 46c in the reservoir tank 46 is connected to an oil passage 28d formed in the axle bracket 28. The oil passage 28d is connected to the oil passage 29e in the cylinder securing member 29.

As shown in Fig. 1, a fuel tank 49 is disposed above the main frame 3. A seat 50 is disposed behind the fuel tank 49. An engine 51 is attached under the main frame 3. A radiator 52 is provided in front of the engine 51 and cools cooling water supplied to the engine 51. A pivot shaft (not shown) is provided behind the main frame 3. The pivot shaft supports a front end section of a rear arm 53 in such a way that the front end section can swing upward and downward. A rear wheel 54 is rotatably attached to a rear end section of the rear arm 53.

An upper attachment section 55a of a rear suspension 55 is attached to a support section 3a above the rear portion of the main frame 3. A lower attachment section 55b of the rear suspension 55 is connected to the rear arm 53 via connection members 56 and 57.

The operation of the front fork 10 of the motorcycle 1 according to the first embodiment will now be described. The operation of the front fork 10 of the motorcycle 1 according to the first embodiment will be described with reference to Figs. 2 and 3.

A description will be first made of the case where a compression force acts on the front fork 10. When a compression force acts on the front fork 10, the shortened front fork 10 generates a damping force.

Specifically, as shown in Fig. 2, when the piston 17 and the rod 16 are lowered with respect to the inner cylinder 18, the oil having substantially the same volume as the volume of the portion of the rod 16 that has entered the inner cylinder 18 flows into the reservoir tank 46 through the oil passages 43b, 29d, 29b and 39, the compression-side damping force controller 40, and the oil passages 41, 29c and 28d. At this point, in the compression-side damping force controller 40, the effective cross-sectional area of the damping passage 40c is reduced to increase the pressure on the upstream side. The inner pressure in the inner cylinder 18 therefore increases and hence a counter force (damping force) is generated against the rod 16 that has entered. The compression-side damping force controller 40 controls the difference between the pressure upstream of the valve 40a and the pressure downstream of the valve 40a in such a way that an appropriate damping force is generated according to the state of traveling. The oil in the lower oil chamber 18b then flows into the upper oil chamber 18a through the plurality of oil passage holes 17b in the piston 17, as indicated by the solid arrows in Fig. 2.

A description will be made of the case where an extension force acts on the front fork 10. When an extension force acts on the front fork 10, the extended front fork 10 generates a damping force.

Specifically, when the piston 17 and the rod 16 are lifted with respect to the inner cylinder 18, the oil having substantially the same volume as the volume of the portion of the rod 16 that has ejected from the inner cylinder 18 flows into the lower oil chamber 18b from the reservoir tank 46 through the oil passages 28d, 29c, 29f and 29e. The oil in the upper oil chamber 18a in the inner cylinder 18 also flows into the lower oil chamber 18b through the oil passage hole 31a, the intermediate oil chamber 10c, the oil passages 29a and 37, the extension-side damping force controller 36, the oil passages 38, 39, 29b, 29d and 43b. At this point, in the extension-side damping force controller 36, the effective cross sectional area of the damping passage 36c is reduced to increase the pressure on the upstream side. The inner pressure in the inner cylinder 18 therefore increases and hence a counter force (damping force) against the extended front forks 10 is generated. The extension-side damping force controller 36 controls the difference between the pressure upstream of the valve 36a and the pressure downstream of the valve 36a in such a way that an appropriate damping force is generated according to the state of traveling.

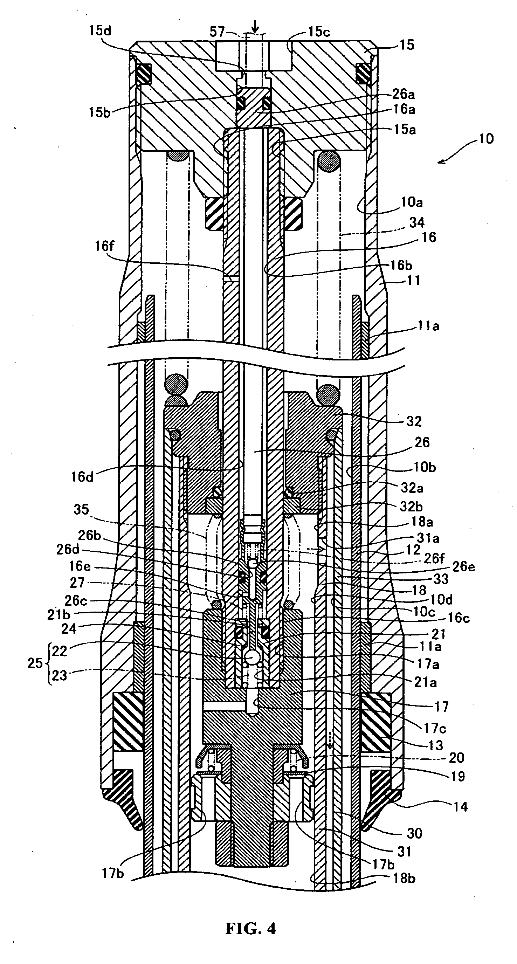

Fig. 4 explains the process for releasing the pressure in the front fork of the motorcycle according to the first embodiment shown in Fig. 1. The process for releasing the pressure in the front fork 10 of the motorcycle 1 according to the first embodiment will be described with reference to Figs. 2 to 4. In the first embodiment, the process for releasing the pressure is adjusting the hydraulic pressure in the high-pressure inner oil chamber 10d to a predetermined value (about 5 atm to about 15 atm (about 0.5 MPa to about 1.5 MPa)) by supplying the oil from the high-pressure inner oil chamber 10d to the low-pressure outer oil chamber 10b. The process for releasing the pressure is carried out when the vehicle is stationary. In the first embodiment, since the seal member 32a is configured such that the oil gradually moves from the low-pressure outer oil chamber 10b to the high-pressure upper oil chamber 18a (inner oil chamber 10d) when the front fork 10 is extended or compressed, the hydraulic pressure in the high-pressure upper oil chamber 18a (inner oil chamber 10d) increases in the long term.

First, to discharge the oil in the high-pressure upper oil chamber 18a (inner oil chamber 10d) to the outer oil chamber 10b, in the state shown in Fig. 3, a stick 57 or the like is inserted into the insertion hole 15d in the rod securing member 15 to press the upper surface of the upper end section 26a of the pressing member 26 downward, as shown in Fig. 4. The lower surface of the upper end section 26a of the pressing member 26 thus abuts the upper surface of the rod 16, and at the same time, the pressing section 26c of the piston 26b of the pressing member 26 is inserted into the oil passage hole 21b in the tubular member 21 to move the valve 22 downward against the urging force of the compression coil spring 23. At this point, since the above action opens the oil passage 21a in the tubular member 21, the oil in the upper oil chamber 18a is allowed to flow into the lower oil passage 16e in the rod 16 through the oil passage 17c in the piston 17 and the oil passage 21a in the tubular member 21. The hydraulic pressure in the lower oil passage 16e in the rod 16 therefore increases, so that the valve 26e of the pressing member 26 moves upward against the urging force of the compression coil spring 26f, and at the same time, the oil in the lower oil passage 16e in the rod 16 flows into the upper oil passage 16d through the oil passage 26d in the pressing member 26. The oil that has flowed into the upper oil passage 16d is discharged into the upper gas chamber 10a through the oil passage 16f and then flows downward into the outer oil chamber 10b.

Then, when the gas pressure in the gas chamber 46b in the reservoir tank 46 (see Fig. 2) becomes lower than the predetermined value (about 5 atm to about 15 atm (about 0.5 MPa to about 1.5 MPa)), the valve 26e of the pressing member 26 closes the oil passage 26d, so that the oil in the lower oil passage 16e cannot move to the upper oil passage 16d. Then, the stick 57 or the like is removed from the insertion hole 15d in the rod securing member 15 to restore the state shown in Fig. 3.

As described above, the front fork 10 includes the oil passages 17c, 21a, 16e, 26d, 16d and 16f for supplying the oil from the inner oil chamber 10d (upper oil chamber 18a) to the outer oil chamber 10b and the hydraulic pressure adjuster 25 that adjusts the hydraulic pressure in the inner oil chamber 10d (upper oil chamber 18a) by using the pressing member 26 to manually and externally apply a load so as to supply the oil from the inner oil chamber 10d (upper oil chamber 18a) to the outer oil chamber 10b side through the oil passages 17c, 21a, 16e, 26d, 16d and 16f. Therefore, even when the oil gradually moves from the outer oil chamber 10b to the inner oil chamber 10d (upper oil chamber 18a) due to the extension and compression of the front fork 10, the pressing member 26 can be used to manually and externally apply a load to the hydraulic pressure adjuster 25 during hydraulic pressure adjustment when the vehicle is not traveling. In this way, the oil can be supplied from the inner oil chamber 10d (upper oil chamber 18a) to the outer oil chamber 10b side through the oil passages 17c, 21a, 16e, 26d, 16d and 16f. It is therefore possible to prevent the hydraulic pressure in the inner oil chamber 10d (upper oil chamber 18a) from exceeding the predetermined value in the normal state. By thus preventing the reaction force of the front fork 10 from being too large, it is possible to prevent change in the position of the vehicle and the ride quality.

Furthermore, the hydraulic pressure adjuster 25 in the front fork 10 includes the valve 22 that opens and closes the oil passage 21a and the compression coil spring 23 that presses the valve 22 in the direction in which the oil passage 21a is closed. The oil passage 21a can therefore be opened by moving the valve 22 in the hydraulic pressure adjuster 25 against the urging force of the compression coil spring 23, so that the oil can be easily supplied from the inner oil chamber 10d (upper oil chamber 18a) to the outer oil chamber 10b through the oil passage 21a.

Moreover, the valve 26e is opened when the gas pressure in the gas chamber 46b in the reservoir tank 46 is higher than the predetermined value (about 5 atm to about 15 atm (about 0.5 MPa to about 1.5 MPa)), while closed when the gas pressure is lower than the predetermined value (about 5 atm to about 15 atm (about 0.5 MPa to about 1.5 MPa)). Therefore, when the oil passes from the inner oil chamber 10d (upper oil chamber 18a) side to the outer oil chamber 10b side through the oil passage 26d, so that the hydraulic pressure in the inner oil chamber 10d, the hydraulic pressure in the oil chamber 46c in the reservoir tank 46, and the gas pressure in the gas chamber 46b become lower than the predetermined value (about 5 atm to about 15 atm (about 0.5 MPa to about 1.5 MPa)), it is therefore possible to close the oil passage 26d to prevent the oil from passing from the inner oil chamber 10d (upper oil chamber 18a) side to the outer oil chamber 10b side, thus preventing the hydraulic pressure in the inner oil chamber 10d, the hydraulic pressure in the oil chamber 46c in the reservoir tank 46 and the gas pressure in the gas chamber 46b from being lower than the predetermined value (about 5 atm to about 15 atm (about 0.5 MPa to about 1.5 MPa)).

Since the pressing member 26 disposed in the rod 16 can be used to press the hydraulic pressure adjuster 25 without disassembling the front fork 10, the oil can be easily supplied from the inner oil chamber 10d (upper oil chamber 18a) to the outer oil chamber 10b.

### Second Embodiment

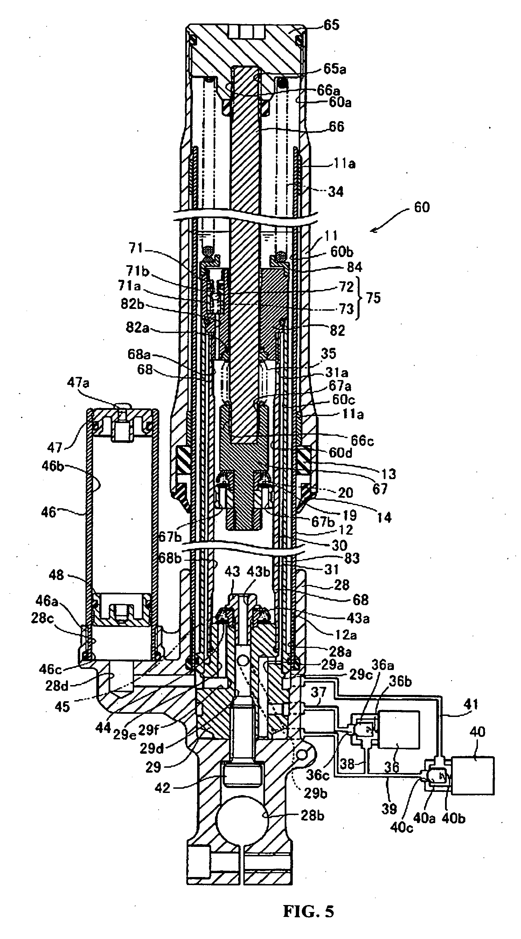

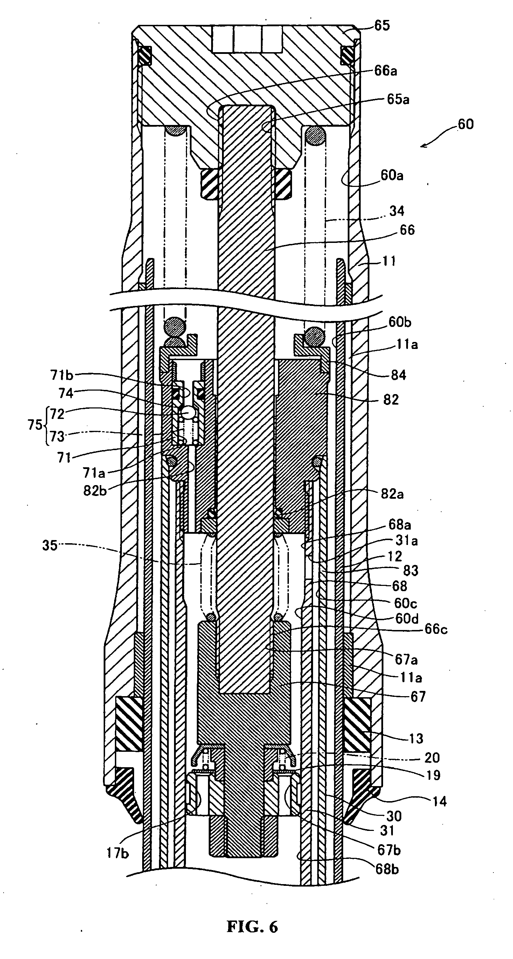

Figs. 5 and 6 are cross-sectional views for explaining in detail the structure of the front fork of the motorcycle according to a second embodiment of the invention. With reference to Figs. 5 and 6, a description will be made of the case where, unlike the first embodiment described above, in the second embodiment, the oil passage for supplying the oil from the high-pressure inner oil chamber to the low-pressure outer oil chamber and the hydraulic pressure adjuster for adjusting the hydraulic pressure in the high-pressure inner oil chamber are provided in a rod guiding member 32.

In the second embodiment, as shown in Fig. 6, the following components are provided in the outer tube 11 and the inner tube 12, as in the first embodiment: an upper gas chamber 60a, an outer oil chamber 60b, an intermediate oil chamber 60c disposed between the inner circumferential surface of an outer cylinder 83 and the outer circumferential surface of an inner cylinder 68, and an inner oil chamber 60d disposed in the inner cylinder 68. The outer oil chamber 60b is an example of a "low-pressure oil chamber" of the invention, and the intermediate oil chamber 60c and the inner oil chamber 60d are examples of a "high-pressure oil chamber" of the invention. The inner cylinder 68 and the outer cylinder 83 are examples of a "cylinder" of the invention. A rod securing member 65 is fitted into an upper end section of the outer tube 11 in a front fork 60. No lower recessed section or insertion hole is formed in the rod securing member 65 unlike in the first embodiment described above. An upper end screw 66a of a rod 66 is secured into a screw hole 65a in the rod securing member 65. No oil passage or hydraulic pressure adjuster is provided in the rod 66 unlike in the first embodiment described above. The front fork 60 is an example of a "suspension" of the invention.

A lower end screw 66c of the rod 66 is secured into a screw hole 67a of a piston 67 disposed in the inner cylinder 68. A plurality of oil passage holes 67b are formed in the piston 67 and pass the oil from a lower oil chamber 68b to an upper oil chamber 68a. No oil passage for supplying the oil from the upper oil chamber 68a into the rod 66 is formed in the piston 67, unlike in the first embodiment described above.

A rod guiding member 82 is secured to the upper portions of the outer cylinder pipe 30 and the inner cylinder pipe 31. A seal member 82a is attached to the rod guiding member 82, as in the first embodiment described above, and provides oil sealing between the rod guiding member 82 and the reciprocally moving rod 66 to prevent the oil from moving (leaking) between the upper oil chamber 68a (inner oil chamber 60d) and the outer oil chamber 60b. A spring receiving member 84 is provided above the upper surface of the rod guiding member 82, and a compression coil spring 34 is disposed between the upper surface of the spring receiving member 84 and the lower surface of the rod securing member 65.

The rod guiding member 82 has an oil passage 82b for supplying the oil from the upper oil chamber 68a to the outer oil chamber 60b. In the rod guiding member 82, there are formed a tubular member 71 having an oil passage 71a, a spherical valve 72 that opens and closes the oil passage 71a, a compression coil spring 73 that presses the valve 72, and a rubber seal member 74 that provides sealing between the tubular member 71 and the valve 72. An oil passage hole 71b into which a pressing section 76c of a pressing member 76, which will be described later, is inserted is formed in the tubular member 71. The valve 72 is an example of a "first check valve" of the invention, and the compression coil spring 73 is an example of a "first compression coil spring" of the invention. The valve 72 and the compression coil spring 73 form a hydraulic pressure adjuster 75. In the hydraulic pressure adjuster 75, the compression coil spring 73 presses the valve 72 at a predetermined pressing force to block the oil passage 71a. The hydraulic pressure adjuster 75 is configured to open the oil passage 71a so as to supply the oil from the upper oil chamber 68a side to the outer oil chamber 60b side when the valve 72 is pressed downward against the urging force of the compression coil spring 73. The oil passage 82b in the rod guiding member 82 and the oil passage 71a in the tubular member 71 form a "first oil passage" of the invention.

The other structures in the second embodiment are similar to those in the first embodiment described above.

The operation of the front fork 60 according to the second embodiment is similar to the operation of the front fork 10 according to the first embodiment described above.

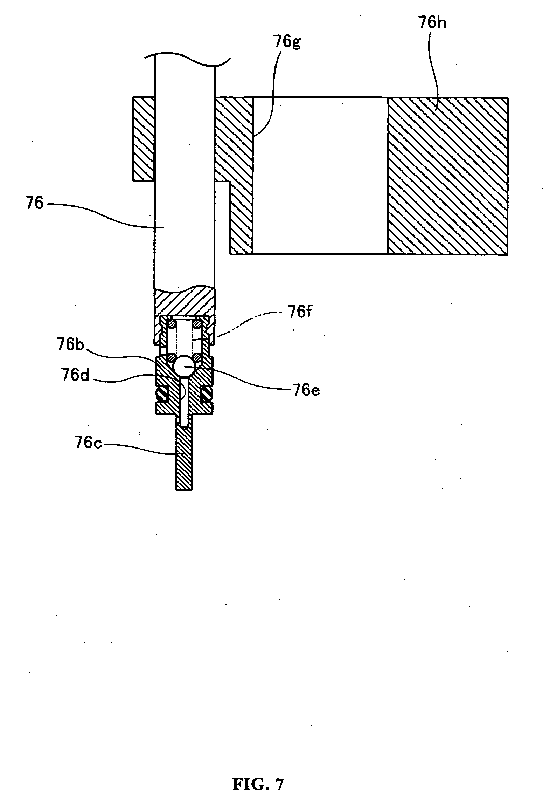

Fig. 7 is a cross-sectional view for explaining the structure of the pressing member used in the process for releasing the pressure in the front fork of the motorcycle according to the second embodiment shown in Fig. 5. The structure of the pressing member used in the process for releasing the pressure in the front fork of the motorcycle according to the second embodiment will be described with reference to Figs. 5 and 7.

The pressing member 76 is a separate component from the front fork 60 (see Fig. 5). The pressing member 76 is removably attached to the front fork 60 and is only attached to the front fork 60 during maintenance. In the lower portion of the pressing member 76, there are provided a piston 76b having the pressing section 76c and an oil passage 76d that passes the oil from the tubular member 71 side (see Fig. 6) to the outer oil chamber 60b (see Fig. 6), as in the first embodiment. The oil passage 76d is an example of a "second oil passage" of the invention. In the oil passage 76d in the pressing member 76, there are provided a spherical valve 76e that opens and closes the oil passage 76d and a compression coil spring 76f that presses the valve 76e. The valve 76e is an example of a "second check valve" of the invention, and the compression coil spring 76f is an example of a "second compression coil spring" of the invention. The pressing member 76 includes a guide 76h provided with an insertion hole 76g having an inner diameter of substantially the same size as the outer diameter of the rod 66 (see Fig. 6). The guide 76h also serves as a stopper that abuts the upper surface of the rod guiding member 82 (see Fig. 6) to prevent the pressing section 76c from deeply entering the oil passage hole 71b in the tubular member 71 (see Fig. 6) when the pressing section 76c of the pressing member 76 is inserted into the oil passage hole 71b in the tubular member 71.

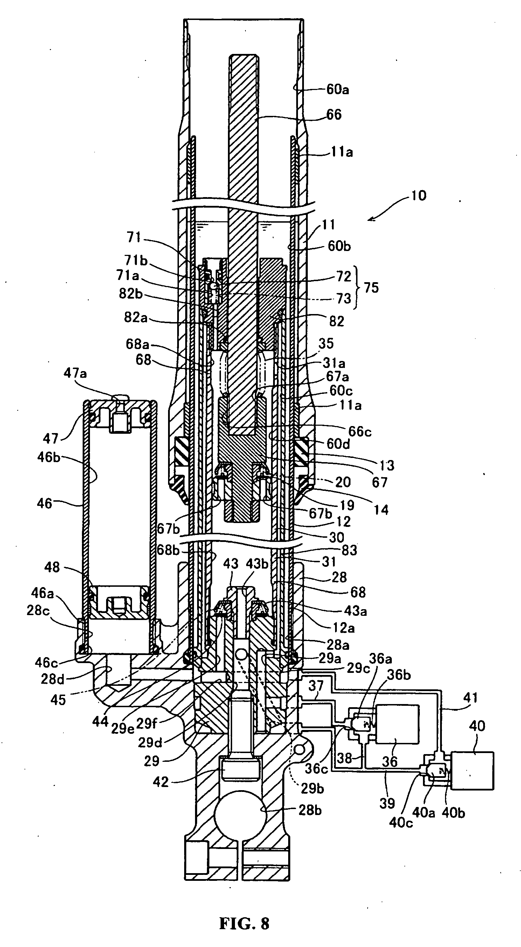

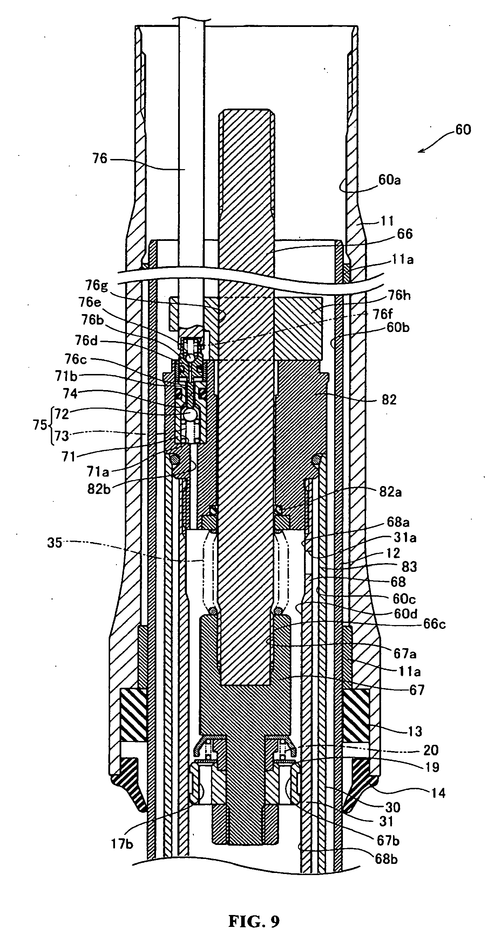

Figs. 8 and 9 explain the process for releasing the pressure in the front fork of the motorcycle according to the second embodiment shown in Fig. 5. The process for releasing the pressure in the front fork 60 of the motorcycle according to the second embodiment will now be described with reference to Figs. 5, 6, 8 and 9.

To discharge the oil in the high-pressure upper oil chamber 68a to the outer oil chamber 60b, in the state shown in Figs. 5 and 6, the rod securing member 65, the compression coil spring 34 and the spring receiving member 84 are removed, as shown in Fig. 8. Then, as shown in Fig. 9, the pressing member 76 is used to discharge the oil in the high-pressure upper oil chamber 68a to the outer oil chamber 60b.

Specifically, after the rod securing member 65, the compression coil spring 34 and the spring receiving member 84 are removed from the front fork 60, the rod 66 is inserted into the insertion hole 76g in the guide 76h of the pressing member 76. The pressing section 76c of the pressing member 76 is then inserted into the oil passage hole 71b in the tubular member 71 until the guide 76h of the pressing member 76 abuts the upper surface of the rod guiding member 82. At this point, the valve 72 is moved downward against the urging force of the compression coil spring 73. In this way, the oil in the upper oil chamber 68a is allowed to flow into the oil passage 82b in the rod guiding member 82 and the oil passage 71a in the tubular member 71. This increases the hydraulic pressure in the oil passage 71a in the tubular member 71, so that the valve 76e of the pressing member 76 is moved upward against the urging force of the compression coil spring 76f, and at the same time, the oil in the oil passage 71a in the tubular member 71 is discharged into the outer oil chamber 60b.

Then, when the gas pressure in the gas chamber 46b in the reservoir tank 46 (see Fig. 8) becomes lower than the predetermined value (about 5 atm to about 15 atm (about 0.5 MPa to about 1.5 MPa)), the valve 76e of the pressing member 76 closes the oil passage 76d, so that the oil in the oil passage 71a in the tubular member 71 cannot move to the outer oil chamber 60b. Then, by removing the guide 76h of the pressing member 76 from the rod 66 and attaching the spring receiving member 84, the compression coil spring 34 and the rod securing member 65 to the front fork 60, the state shown in Fig. 5 is restored.

By configuring the pressing member 76 such that it is a separate component from the front fork 60 and removably attached to the front fork 60, the front fork 60 can be lighter than in the case where the pressing member 76 is attached to the front fork 60.

The other advantages of the second embodiment are similar to those in the first embodiment described above.

The embodiments disclosed herein should be construed as examples and not to be limiting in all aspects. The extent of the invention is set forth not by the description of the above embodiments but by the claims and includes meanings equivalent to the claims and all changes in the claims.

For example, although a motorcycle has been shown as an example of a vehicle with a suspension in the above embodiments, the invention is not limited thereto. The invention can be applied to other vehicles, such as a bicycle, a tricycle and an ATV (All Terrain Vehicle), as long as they are vehicles with suspensions.

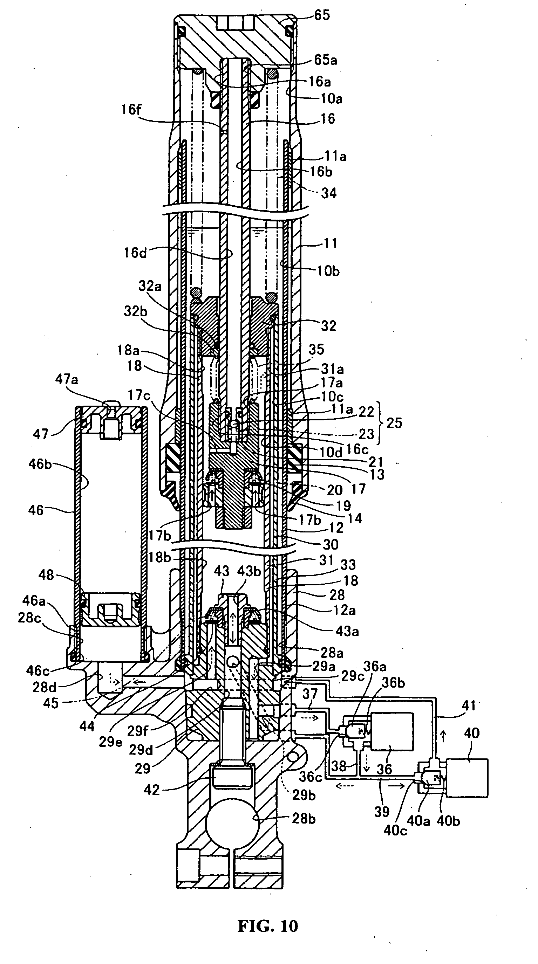

Although the first embodiment has been described with reference to the example in which the pressing member 26 is disposed in the rod 16, the invention is not limited thereto. The pressing member (not shown) may be formed separately from the front fork, and the pressing member (not shown) may be disposed in the rod 16 only during maintenance, as shown in a first variation of the first embodiment shown in Fig. 10. In this case, to release the pressure in the inner oil chamber 10d in the front fork, the upper lid 65 is removed from the outer tube 11 and then the pressing member may be inserted into the rod 16.

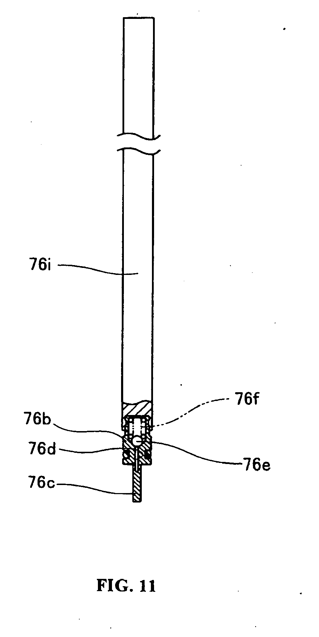

Although the second embodiment has been described with reference to the example in which the pressing member 76 provided with the guide 76h is used to release the pressure in the front fork 60, the invention is not limited thereto. A pressing member 76i without a guide may be used to release the pressure in the front fork, as shown in a second variation of the second embodiment shown in Fig. 11.

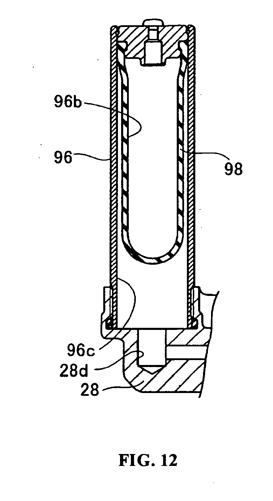

Although the above embodiments have been described with reference to the example in which the piston is provided for dividing the gas chamber from the oil chamber in the reservoir tank, the invention is not limited thereto. A rubber bladder 98 may be provided to divide a gas chamber 96b from an oil chamber 96c in a reservoir tank 96, as shown in a third variation of the invention shown in Fig. 12.

Although the above embodiments have been described with reference to the case in which the damping force generated when the front fork is extended or compressed while the vehicle is traveling can be adjusted according to the state of traveling, the invention is not limited thereto. The front fork may be configured such that the damping force generated when the front fork is extended or compressed cannot be adjusted while the vehicle is traveling and such that the damping force can be adjusted when the vehicle is stationary before start traveling.

### Description of Reference Numerals and Signs

1 motorcycle (vehicle)
2 head pipe (vehicle body)
3 main frame (vehicle body)
4 seat rail (vehicle body)
8 front wheel (wheel of the vehicle)
10, 60 front fork (suspension)
10b, 60b outer oil chamber (low-pressure oil chamber)
10c, 60c intermediate oil chamber (high-pressure oil chamber)
10d, 60d inner oil chamber (high-pressure oil chamber)
16, 66 rod
16d, 16e, 16f, 17c, 21a, 71a, 82b oil passage (first oil passage)
17, 67 piston
18, 68 inner cylinder (cylinder)
22, 72 valve (first check valve)
23, 73 compression coil spring (first compression coil spring)
25, 75 hydraulic pressure adjuster
26, 76 pressing member
26d, 76d oil passage (first oil passage, second oil passage)
26e, 76e valve (second check valve)
26f, 76f compression coil spring (second compression coil spring)
32a, 82a seal member
33, 83 outer cylinder (cylinder)
46 reservoir tank
46b gas chamber
46c oil chamber
82 rod guiding member

## Claims

1. A suspension system (10, 60) for a vehicle (1), the system (10, 60) comprising:
a damper having:
a high-pressure oil chamber (10c, 10d, 60c, 60d),
a low-pressure oil chamber (10b, 60b),
a damping force controller (36,40) for controlling flow of oil to and from parts of the high-pressure oil chamber (18a,18b),
a seal member (32a, 82a) that provides sealing between the chambers (10c, 10d, 60c, 60d; 10b, 60b);
a first oil passage (16d, 16e, 16f, 17c, 21a, 71a, 82b) for connecting the high-pressure oil chamber (10c, 10d, 60c, 60d) to the low-pressure oil chamber (10b, 60b), and
a hydraulic pressure adjuster (25, 75) that is provided in the first oil passage (16d, 16e, 16f, 17c, 21a, 71a, 82b) and adjusts the hydraulic pressure in the high-pressure oil chamber (10c, 10d, 60c, 60d).

2. The suspension system according to claim 1, wherein the first oil passage (16d, 16e, 16f, 17c, 21a, 71a, 82b) is adapted to be closed when the vehicle (1) is traveling, and opened during hydraulic pressure adjustment when the vehicle (1) is not traveling.

3. The suspension system (10, 60) according to claim 1 or 2, wherein the hydraulic pressure adjuster (25, 75) includes a first check valve (22, 72) that opens and closes the first oil passage(16d, 16e, 16f, 17c, 21a, 71a, 82b), and a first compression coil spring (23, 73) that presses the first check valve (22, 72) in a direction to close the first oil passage(16d, 16e, 16f, 17c, 21a, 71a, 82b).

4. The suspension system (10, 60) according to claim 1, 2 or 3, wherein the suspension (10, 60) further includes:
a rod (16, 66) which is secured at one end to the vehicle body 2, 3, 4);
a piston (17, 67) secured to the other end of the rod (16, 66); and
a cylinder (18, 68) in which the piston (17, 67) is disposed, wherein the cylinder (18, 68) is connected to the axle (8a) of the wheel (8).

5. The suspension system (10, 60) according to claim 4, wherein the hydraulic pressure adjuster (25, 75) is disposed in the rod (16, 66).

6. The suspension system (10, 60) according to claim 4 or 5, wherein the suspension (10, 60) further includes a rod guiding member (82) that is attached to the cylinder (18, 68) and moves the cylinder (18, 68) along and relative to the rod (16, 66).

7. The suspension system (10, 60) according to claim 6, wherein the hydraulic pressure adjuster (25, 27) is disposed in the rod guiding member (82).

8. The suspension system (10, 60) according to any preceding claim, wherein the hydraulic pressure adjuster (25, 27) is adapted to be pressed by application of a load from a pressing member (26, 76) so as to open the first oil passage(16d, 16e, 16f, 17c, 21a, 71a, 82b).

9. The suspension system (10, 60) according to claim 8, wherein the pressing member (26, 76) includes a second oil passage (26d, 76d) for connecting the high-pressure oil chamber (10c, 10d, 60c, 60d) to the low-pressure oil chamber(16d, 16e, 16f, 17c, 21a, 71a, 82b), a second check valve (26e, 76e) that opens and closes the second oil passage (26d, 76d) , and a second compression coil spring (26f, 76f) that presses the second check valve (26e, 76e) at a predetermined pressing force in a direction to close the second oil passage (26d, 76d).

10. The suspension system (10, 60) according to any preceding claim, further comprising a reservoir tank (46) including an oil chamber (46c) and a gas chamber (46b), the oil chamber (46c) communicating with the high-pressure oil chamber (10c, 10d, 60c, 60d) in the suspension (10, 60).

11. The suspension system (10, 60) according to claims 9 and 10, wherein the second check valve (26e, 76e) opens when the gas pressure in the gas chamber (46b) in the reservoir tank (46) is higher than a predetermined value, while closing when the gas pressure is lower than the predetermined value.

12. The suspension system (10, 60) according to any one of claims 8 to 11, when dependent on any one of claims 4 to 7, wherein the pressing member (26, 76) is disposed in the cylinder (18, 68).

13. The suspension system (10, 60) according to any one of claims 8 to 12, wherein the pressing member (26, 76) is formed separately from the suspension (10, 60) and removably attached to the suspension (10, 60).

14. The suspension system (10,60) of any preceding claim, wherein the damping force controller comprises an extension-side damping force controller (36) and a compression-side damping force controller (40).

15. The suspension system (10, 60) according to any preceding claim, wherein the suspension system (10, 60) comprises a front fork.

16. A vehicle (1) comprising:
a wheel (8);
a vehicle body (2, 3, 4); and
a suspension (10, 60) according to any one of claims 1 to 15, wherein the suspension is provided between the wheel (8) and the vehicle body (2, 3, 4) and absorbs impact when the vehicle body (2, 3, 4) moves relative to the wheel (8).

## Patentansprüche

1. Aufhängungssystem (10, 60) für ein Fahrzeug (1), wobei das System (10, 60) Folgendes umfasst:
einen Dämpfer, der Folgendes hat:
eine Hochdruck-Ölkammer (10c, 10d, 60c, 60d),
eine Niederdruck-Ölkammer (10b, 60b),
ein Dämpfungskraft-Steuergerät (36, 40) zum Regeln des Durchflusses von Öl zu und von Teilen (18a, 18b) der Hochdruck-Ölkammer,
ein Dichtungselement (32a, 82a), das eine Abdichtung zwischen den Kammern (10c, 10d, 60c, 60d; 10b, 60b) gewährleistet,
einen ersten Öldurchgang (16d, 16e, 16f, 17c, 21a, 71a, 82b), um die Hochdruck-Ölkammer (10c, 10d, 60c, 60d) mit der Niederdruck-Ölkammer (10b, 60b) zu verbinden, und
einen Hydraulikdruck-Regler (25, 75), der in dem ersten Öldurchgang (16d, 16e, 16f, 17c, 21a, 71a, 82b) bereitgestellt wird und den Hydraulikdruck in der Hochdruck-Ölkammer (10c, 10d, 60c, 60d) regelt.

2. Aufhängungssystem nach Anspruch 1, wobei der erste Öldurchgang (16d, 16e, 16f, 17c, 21 a, 71 a, 82b) dafür eingerichtet ist, geschlossen zu sein, wenn das Fahrzeug ( 1 ) fährt, und geöffnet während der Hydraulikdruck-Regelung, wenn das Fahrzeug (1) nicht fährt.

3. Aufhängungssystem (10, 60) nach Anspruch 1 oder 2, wobei der Hydraulikdruck-Regler (25, 75) ein erstes Rückschlagventil (22, 72), das den ersten Öldurchgang (16d, 16e, 16f, 17c, 2 1 a, 7 1 a, 82b) öffnet und schließt, und eine erste Druckschraubenfeder (23, 73), die das erste Rückschlagventil (22, 72) in einer Richtung drückt, um den ersten Öldurchgang (16d, 16e, 16f, 17c, 2 1 a, 7 1 a, 82b) zu schließen, einschließt.

4. Aufhängungssystem (10, 60) nach Anspruch 1, 2 oder 3, wobei die Aufhängung (10, 60) ferner Folgendes einschließt:
eine Stange (16, 66), die an einem Ende an dem Fahrzeugaufbau (2, 3, 4) befestigt ist,
einen Kolben (17, 67), der an dem anderen Ende der Stange (16, 66) befestigt ist, und
einen Zylinder (18, 68), in dem der Kolben (17, 67) angeordnet ist, wobei der Kolben (18, 68) mit der Achse (8a) des Rades (8) verbunden ist.

5. Aufhängungssystem (10, 60) nach Anspruch 4, wobei der Hydraulikdruck-Regler (25, 75) in der Stange (16, 66) angeordnet ist.

6. Aufhängungssystem (10, 60) nach Anspruch 4 oder 5, wobei die Aufhängung (10, 60) ferner ein Stangenführungselement (82) einschließt, das an dem Zylinder (18, 68) befestigt ist und den Zylinder (18, 68) längs und im Verhältnis zu der Stange (16, 66) bewegt.

7. Aufhängungssystem (10, 60) nach Anspruch 6, wobei der Hydraulikdruck-Regler (25, 75) in dem Stangenführungselement (82) angeordnet ist.

8. Aufhängungssystem (10, 60) nach einem der vorhergehenden Ansprüche, wobei der Hydraulikdruck-Regler (25, 75) dafür eingerichtet ist, durch das Ausüben einer Belastung durch ein Presselement (26, 76) gepresst zu werden, um so den ersten Öldurchgang (16d, 16e, 16f, 17c, 21 a, 71 a, 82b) zu öffnen.

9. Aufhängungssystem (10, 60) nach Anspruch 8, wobei das Presselement (26, 76) einen zweiten Öldurchgang (26d, 76d), um die Hochdruck-Ölkammer (10c, 10d, 60c, 60d) mit der Niederdruck-Ölkammer (10b, 60b) zu verbinden, ein zweites Rückschlagventil (26e, 76e), das den zweiten Öldurchgang (26d, 76d) öffnet und schließt, und eine zweite Druckschraubenfeder (26f, 76f), die das zweite Rückschlagventil (26e, 76e) mit einer vorbestimmten Druckkraft in eine Richtung drückt, um den zweiten Öldurchgang (26d, 76d) zu schließen, einschließt.

10. Aufhängungssystem (10, 60) nach einem der vorhergehenden Ansprüche, das ferner einen Vorratstank (46) umfasst, der eine Ölkammer (46c) und eine Gaskammer (46b) einschließt, wobei die Ölkammer (46c) mit der Hochdruck-Ölkammer (10c, 10d, 60c, 60d) in der Aufhängung (10, 60) in Verbindung steht.

11. Aufhängungssystem (10, 60) nach Anspruch 9 und 10, wobei das zweite Rückschlagventil (26e, 76e) öffnet, wenn der Gasdruck in der Gaskammer (46b) in dem Vorratstank (46) höher ist als ein vorbestimmter Wert, während es schließt, wenn der Gasdruck niedriger ist als der vorbestimmte Wert.

12. Aufhängungssystem (10, 60) nach einem der Ansprüche 8 bis 11, wenn abhängig von einem der Ansprüche 4 bis 7, wobei das Presselement (26, 76) in dem Zylinder (18, 68) angeordnet ist.

13. Aufhängungssystem (10, 60) nach einem der Ansprüche 8 bis 12, wobei das Presselement (26, 76) gesondert von der Aufhängung (10, 60) geformt und abnehmbar an der Aufhängung (10, 60) befestigt ist.

14. Aufhängungssystem (10, 60) nach einem der vorhergehenden Ansprüche, wobei das Dämpfungskraft-Steuergerät ein ausfahrseitiges Dämpfungskraft-Steuergerät (36) und ein kompressionsseitiges Dämpfungskraft-Steuergerät (40) umfasst.

15. Aufhängungssystem (10, 60) nach einem der vorhergehenden Ansprüche, wobei das Aufhängungssystem (10, 60) eine Vordergabel umfasst.

16. Fahrzeug (1), das Folgendes umfasst:
ein Rad (8),
einen Fahrzeugaufbau (2, 3, 4) und
eine Aufhängung (10, 60) nach einem der Ansprüche 1 bis 15, wobei die Aufhängung zwischen dem Rad (8) und dem Fahrzeugaufbau (2, 3, 4) bereitgestellt wird und den Stoß absorbiert, wenn sich der Fahrzeugaufbau (2, 3, 4) im Verhältnis zu dem Rad (8) bewegt.

## Revendications

1. Système de suspension (10, 60) pour un véhicule (1), le système (10, 60) comprenant :
un amortisseur, comportant :
une chambre à huile haute pression (10c, 10d, 60c, 60d) ;
une chambre à huile basse pression (10b, 60b) ;
un moyen de commande de la force d'amortissement (36, 40), pour contrôler l'écoulement de l'huile vers des parties de la chambre à huile haute pression (18a, 18b) et à partir de celles-ci ;
un élément de joint d'étanchéité (32a, 82a) établissant l'étanchéité entre les chambres (10c, 10d, 60c, 60d ; 10b, 60b) ;
un premier passage d'huile (16d, 16e, 16f, 17c, 21a, 71a, 82b) pour connecter la chambre à huile haute pression (10c, 10d, 60c, 60d) à la chambre à huile basse pression (10b, 60b) ; et
un moyen d'ajustement de la pression hydraulique (25, 75), agencé dans le premier passage d'huile (16d, 16e, 16f, 17c, 21a, 71a, 82b) et ajustant la pression hydraulique dans la chambre à huile haute pression (10c, 10d, 60c, 60d).

2. Système de suspension selon la revendication 1, dans lequel le premier passage d'huile (16d, 16e, 16f, 17c, 21a, 71a, 82b) est adapté pour être fermé lors du roulement du véhicule (1) et ouvert au cours de l'ajustement de la pression hydraulique, lorsque le véhicule (1) ne roule pas.

3. Système de suspension (10, 60) selon les revendications 1 ou 2, dans lequel le moyen d'ajustement de la pression hydraulique (25, 75) englobe une première soupape de retenue (22, 72), ouvrant et fermant le premier passage d'huile (16d, 16e, 16f, 17c, 21a, 71 a, 82b), et un premier ressort de compression hélicoïdal (23, 73), pressant la première soupape de retenue (22, 72) dans une direction pour fermer le premier passage d'huile (16d, 16e, 16f, 17c, 21a, 71a, 82b).

4. Système de suspension (10, 60) selon les revendications 1, 2 ou 3, dans lequel la suspension (10, 60) englobe en outre :
une tige (16, 66), fixée au niveau d'une extrémité sur la carrosserie du véhicule (2, 3,4);
un piston (17,67) fixé sur l'autre extrémité de la tige (16, 66) ; et
un cylindre (18, 68), dans lequel est agencé le piston (17, 67), le cylindre (18, 68) étant connecté à l'essieu (8a) de la roue (8).

5. Système de suspension (10, 60) selon la revendication 4, dans lequel le moyen d'ajustement de la pression hydraulique (25, 75) est agencé dans la tige (16, 66).

6. Système de suspension (10, 60) selon les revendications 4 ou 5, dans lequel la suspension (10, 60) englobe en outre un élément de guidage de la tige (82) fixé sur le cylindre (18, 68), déplaçant le cylindre (18, 68) par rapport à la tige (16, 66) et le long de celle-ci.

7. Système de suspension (10, 60) selon la revendication 6, dans lequel le moyen d'ajustement de la pression hydraulique (25, 75) est agencé dans l'élément de guidage de la tige (82).

8. Système de suspension (10, 60) selon l'une quelconque des revendications précédentes, dans lequel le moyen d'ajustement de la pression hydraulique (25, 75) est adapté pour être pressé par suite de l'application d'une charge par un élément de pression (26, 76), de sorte à ouvrir le premier passage d'huile (16d, 16e, 16f, 17c, 21a, 71a, 82b).

9. Système de suspension (10, 60) selon la revendication 8, dans lequel l'élément de pression (26, 76) englobe un deuxième passage d'huile (26d, 76d) pour connecter la chambre à huile haute pression (10c, 10d, 60c, 60d) à la chambre à 'huile basse pression (10b, 60b), une deuxième soupape de retenue (26e, 76e), ouvrant et fermant le deuxième passage d'huile (26d, 76d), et un deuxième ressort de compression hélicoïdal (26f, 76f), pressant la deuxième soupape de retenue (26e, 76e) avec une force de pression prédéterminée dans une direction, pour fermer le deuxième passage d'huile (26d, 76d).

10. Système de suspension (10, 60) selon l'une quelconque des revendications précédentes, comprenant en outre un réservoir (46) englobant une chambre à huile (46c) et une chambre à gaz (46b), la chambre à huile (46c) communiquant avec la chambre à huile haute pression (10c, 10d, 60c, 60d) dans la suspension (10, 60).

11. Système de suspension (10, 60) selon les revendications 9 et 10, dans lequel la deuxième soupape de retenue (26e, 76e) est ouverte lorsque la pression du gaz dans la chambre à gaz (46b) dans le réservoir (46) est supérieure à une valeur prédéterminée, et est fermée lorsque la pression du gaz est inférieure à la valeur prédéterminée.

12. Système de suspension (10, 60) selon l'une quelconque des revendications 8 à 11, dépendant de l'une quelconque des revendications 4 à 7, dans lequel l'élément de pression (26, 76) est agencé dans le cylindre (18, 68).

13. Système de suspension (10, 60) selon l'une quelconque des revendications 8 à 12, dans lequel l'élément de pression (26, 76) est formé séparément de la suspension (10, 60) et est fixé de manière amovible sur la suspension (10, 60).

14. Système de suspension (10, 60) selon l'une quelconque des revendications précédentes, dans lequel le moyen de commande de la force d'amortissement comprend un moyen de commande de la force d'amortissement du côté d'extension (36) et un moyen de commande de la force d'amortissement du côté de compression (40).

15. Système de suspension (10, 60) selon l'une quelconque des revendications précédentes, dans lequel le système de suspension (10, 60) comprend une fourche avant.

16. Véhicule (1), comprenant :
une roue (8) ;
une carrosserie du véhicule (2, 3, 4) ; et
une suspension (10, 60) selon l'une quelconque des revendications 1 à 15, la suspension étant agencée entre la roue (8) et la carrosserie du véhicule (2, 3, 4) et absorbant l'impact lorsque la carrosserie du véhicule (2, 3, 4) se déplace par rapport à la roue (8).
